Europäisches Patentamt

European Patent Office

Office européen des brevets

(11) Numéro de publication: **0 243 236**

**A1**

## (12) DEMANDE DE BREVET EUROPEEN

(21) Numéro de dépôt: **87400829.5**

(22) Date de dépôt: **13.04.87**

(51) Int. Cl.⁴: **B 65 G 49/06**

(30) Priorité: **18.04.86 FR 8605656**

(43) Date de publication de la demande:
**28.10.87 Bulletin 87/44**

(84) Etats contractants désignés:
**AT BE CH DE ES FR GB GR IT LI LU NL SE**

(71) Demandeur: **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex (FR)**

(72) Inventeur: **Gabillet, Maurice**
**53, Rue d'Aguesseau**
**F-92100 Boulogne Billancourt (FR)**

(74) Mandataire: **Combe, André et al**
**CABINET BEAU DE LOMENIE 55, rue d'Amsterdam**
**F-75008 Paris (FR)**

(54) **Dispositif pour le transfert d'objets, notamment de plaques de verre.**

(57) L'invention concerne un dispositif pour le transfert d'objets d'un poste de préhension à un poste de dépose.

Le dispositif est caractérisé en ce qu'il comprend :
- au moins un bras (5) monté perpendiculairement à un arbre (3) qui l'entraîne en rotation, ledit bras pouvant coulisser perpendiculairement audit arbre
- des moyens de préhension (15) montés à chaque extrémité dudit bras
- des moyens pour la commande automatique de la rotation de l'arbre du coulissement et du verrouillage du bras et de la manoeuvre des moyens de préhension.

L'invention s'applique notamment au chargement ou déchargement de plaques de verre.

FIG 1

EP 0 243 236 A1

## Description

<u>Dispositif pour le transfert d'objets, notamment de plaques de verre.</u>

L'invention concerne un dispositif pour le transfert d'objets, en partuclier pour le chargement ou le déchargement de plaques de verre.

On appelle transfert l'opération consistant à saisir l'objet à un poste dit de préhension pour le déposer à un poste dit de dépose.

Par chargement ou déchargement il faut comprendre le transfert des objets, en particulier des plaques, d'un poste de préhension à un poste de dépose, les objets (plaques) passant d'une position sensiblement horizontale au poste de préhension à une position sensiblement verticale au poste de dépose (opération dite de chargement) ou bien inversement d'une position sensiblement verticale à une position sensiblement horizontale (déchargement).

Le dispositif objet de l'invention a été créé d'abord pour résoudre le problème du chargement et du déchargement de plaques de verre.

En effet, il sort de l'unité de production verrière (selon le procédé float glass par exemple) une bande de verre qui est ensuite découpée. La bande et les plaques obtenues sont véhiculées par des lignes de convoyage dans le plan horizontal, celle transportant la bande est dite ligne de convoyage principale.

Ces plaques sont ensuite stockées sur des chariots de manutention munis d'un pupitre sur lequel s'appuieront les plaques en position verticale. Ces plaques peuvent ensuite être reprises ultérieurement pour d'autres découpes.

Le problème qui se pose est celui du transfert des plaques de la position horizontale à la position verticale et inversement.

Jusqu'à présent il a été résolu, pour le chargement, à l'aide de dispositifs du type de celui décrit dans le brevet FR 69/03391.

Ledit dispositif est composé d'un système avec des rouleaux transporteurs qui transfèrent la plaque du bout de la ligne de convoyage au poste de préhension et d'un système de chargement qui saisit la plaque horizontale et la dépose en position verticale sur un pupitre.

Le système de chargement est conçu selon deux plans parallèles reliés entre eux par un dispositif articulé à deux croisillons. Le plan inférieur est constitué de deux bras fixés à un arbre pouvant lui-même être entraîné en rotation. Le plan supérieur est constitué de deux bras parallèles aux bras inférieurs et ils sont porteurs de ventouses.

Le dispositif se trouve initialement avec le système articulé replié, les bras étant disposés perpendiculairement à la direction du déplacement du verre. La plaque arrivant en bout de ligne de convoyage passe sur les rouleaux transporteurs qui l'amènent au poste de préhension, c'est-à-dire que la plaque s'appuie sur les ventouses par deux de ses côtés parallèles. L'arrivée de la plaque en bout de poste de préhension agit sur un contact mettant en dépression les ventouses. Le système bascule alors de façon à amener la plaque en position verticale; le développement du système articulé à croisillons permet la dépose de la plaque à l'endroit désigné.

Un autre dispositif utilisé est celui décrit dans le brevet FR 82/06604 pour le transfert d'une plaque en position verticale vers une ligne de convoyage sur laquelle la plaque se retrouvera en position horizontale. Cette opération est effectuée au moyen d'un portique mobile muni d'une poutre à laquelle sont fixés des bras porteurs à leurs extrémités de ventouses. Ainsi, la plaque est saisie sur son chariot en position verticale au moyen des ventouses mises sous dépression. Le portique se déplace pour amener la plaque sur un châssis basculant en position sensiblement inclinée. Le châssis bascule, la plaque est alors en position horizontale et peut être transférée sur la bande transporteuse sans difficultés. Pour augmenter les cadences de déchargement, le brevet prévoit une rotation de 90° de la poutre portant les bras, de sorte que les bras se trouvant en position horizontale ne gênent pas le basculement du châssis, les opérations de basculement et de retour du portique en position initiale ayant alors lieu simultanément.

Il ressort de cet état de la technique la nécessité d'un système du type support basculant pour charger ou décharger des plaques. Avec l'utilisation d'un tel dispositif se pose la question de son encombrement dans l'atelier.

Jusqu'à une époque récente la bande de verre sortant de l'unité de production était découpée sur toute sa largeur (3,50 m) en une plaque de 3,5 m x L, de sorte que la mise en place d'un seul support basculant au bout ou à côté du convoyeur ne posait pas de difficulté importante. Les plaques ainsi stockées sur des pupitres étaient transférées à des chaînes de découpe situées hors de l'unité de production.

A présent, pour augmenter les cadences de production de plaques, la bande de verre est directement découpée sur la ligne de convoyage principale dans le sens longitudinal et dans le sens transversal de façon à obtenir directement les plaques de dimensions voulues. Ainsi sur la ligne de convoyage défilent plusieurs rangées de plaques de sorte que plusieurs plaques arrivent simultanément au poste de préhension.

On conçoit alors que l'encombrement en longueur et en largeur des dispositifs de chargement devient un problème. La solution consiste à les espacer et à utiliser des rouleaux transporteurs de longueurs différentes sur chaque rangée pour acheminer les plaques aux postes de préhension (un poste par rangée).

Par ailleurs, la ligne de convoyage principale est située à environ 1,3 m du sol, ce qui laisse un espace trop réduit en hauteur pour installer des supports basculants.

sur toute une portion de l'espace, la portion qui était indisponible.

Selon un mode particulier de réalisation de la présente invention, les cadences sont élevées. Ceci en multipliant le nombre de bras distribués autour de l'arbre à proximité immédiate les uns des autres, on obtient ainsi des groupes de bras.

Il est particulièrement avantageux d'opérer avec des (un ou plusieurs) groupes de deux bras dits orthogonaux - dits couples de bras orthogonaux - c'est-à-dire que les bras font entre eux un angle de 90°.

Pour la compréhension de la description, il a été supposé que l'arbre 3 est horizontal. Il peut tout aussi bien être disposé verticalement ou dans toute autre direction, les autres caractéristiques de l'invention demeurant inchangées. Avec un dispositif à arbre vertical, le transfert d'objets a lieu sans modification de position, ce peut par exemple être le transfert d'une pile de plaques d'un chariot à un autre chariot...

Ainsi à chaque application industrielle du dispositif selon l'invention adapté avec détermination de la direction de l'arbre, du nombre et de la disposition des bras, du nombre, de la nature et de la disposition des moyens de préhension et réglage de la commande automatique, le transfert d'objets, notamment de plaques de verre d'un poste de préhension à un poste de dépose, à l'aide du dispositif objet de l'invention,a lieu selon les opérations suivantes effectuées dans l'ordre suivant :
- préhension d'un(des) objet(s) au poste de préhension par actionnement du(des) moyen(s) de préhension fixé(s) à l'extrémité du(des) bras en place à ce poste
- rotation de l'arbre d'un angle α pour amener le(les) bras chargé(s) de l'(des) objet(s) au poste de dépose
- dépose del'(des) objet(s) par actionnement du(des) moyen(s) de préhension
- coulissement du(des) bras venant de déposer l'(les) objet(s)
- rotation de l'arbre d'un angle β de façon à amener ledit (lesdits) bras au poste de préhension
et ainsi de suite chaque fois qu'un objet (ou une rangée d'objets) se présente au poste de préhension.

La description du fonctionnement sera suivie sur les figures 6 et 7.

On a représenté un mode de réalisation avec deux bras orthogonaux transférant des objets (plaques par exemple) qui arrivent sur le convoyeur 18 horizontalement à un pupitre de stockage 19 où ils sont rangés verticalement. Sur cette représentation, le transfert sera expliqué pour un seul bras, puis pour deux bras orthogonaux, chaque bras étant équipé d'un moyen de préhension saisissant un objet.

L'arrivée de l'objet au poste de préhension (bout du convoyeur 18) détectée par le capteur 20 à ce poste déclenche, par la commande automatique, la manoeuvre du moyen de préhension 14 monté sur le bras 5 présent à ce poste.

Après saisie et autorisation du capteur 21 de disponibilité au poste de dépose, la rotation de l'arbre 3 est commandée. Sa vitesse et sa durée sont réglées automatiquement.

Lorsque le bras 5 arrive au poste de dépose (constitué ici par le pupitre 19), l'arbre ayant tourné d'un angle α , sa rotation cesse. Le moyen de préhension est actionné. L'objet est déposé.

La commande automatique déclenche alors s'il y a lieu la manoeuvre des unités de stockage (sur les figures, recul du pupitre 19 par exemple) et le coulissement du bras 5 au poste de dépose par action du moyen de coulissement 11 qui entraîne le bras 5 d'une longueur déterminée constante.

Après autorisation du capteur 22 détectant la position du bras (position allongée sur la figure 6), la rotation de l'arbre est commandée pour amener ledit bras au poste de préhension. L'arbre a tourné d'un angle β, la rotation cesse.

A chaque opération, la position de l'arbre est vérifiée et transmise à la commande automatique.

Il a été décrit un cycle (une rotation d'arbre) avec un bras. Le cycle se répète à chaque objet (ou rangée d'objets) arrivant au poste de préhension.

L'angle α qui définit la situation des postes de préhension et dépose entre eux n'est pas forcément égal à 90°, tel que la figure 6 le représente. Sa valeur, donc celle de β (β =π-α) dépend de l'application industrielle, dont dépend à son tour la disposition de bras.

Lorsque le dispositif comporte uniquement un ou plusieurs bras tous parallèles entre eux (c'est-à-dire distribués sur une même génératrice longitudinale de l'arbre), α peut être égal ou différent de 90°, la commande automatique est alors réglée selon cette contrainte. Cette disposition, si elle peut être intéressante au niveau de l'encombrement, ne présente pas par contre de gain de temps.

Le dispositif comportant un ou plusieurs couples de bras orthogonaux est favorable par des cadences élevées. Son fonctionnement par bras est celui décrit précédemment. Mais lorsqu'un bras est au poste de préhension l'autre est au poste de dépose, ainsi la préhension et la dépose ont lieu simultanément, de même les rotations des bras (angle α = β = 90°), le temps d'arrêt à chaque poste étant au moins égal au temps nécessaire à la dépose auquel s'ajoute le temps nécessaire au coulissement du bras à ce poste.

Pour minimiser le temps des opérations pour une rotation d'arbre, le mouvement est réglé de la façon suivante : décélération à l'approche des postes, accélération entre les postes et arrêt auxdits postes. La variation des vitesses de rotation de l'arbre est obtenue par action de la commande automatique.

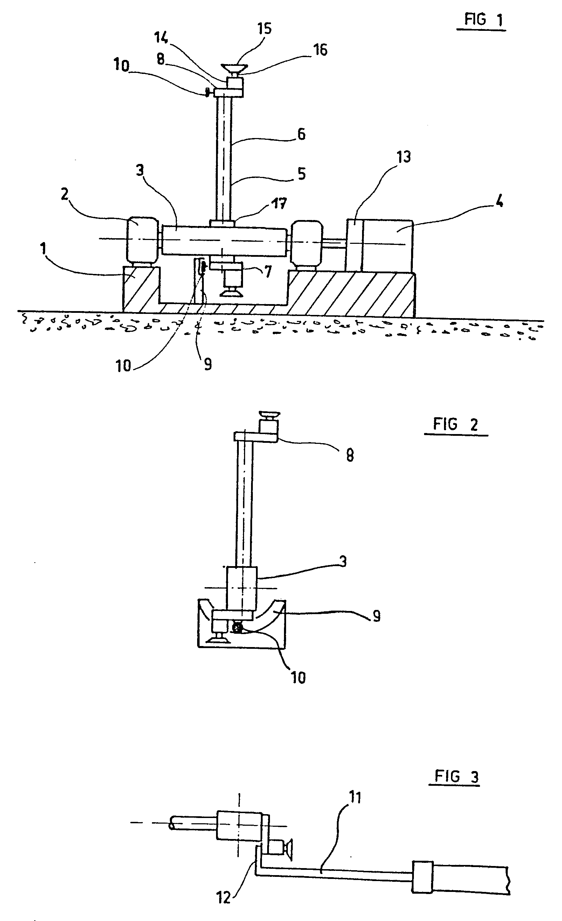

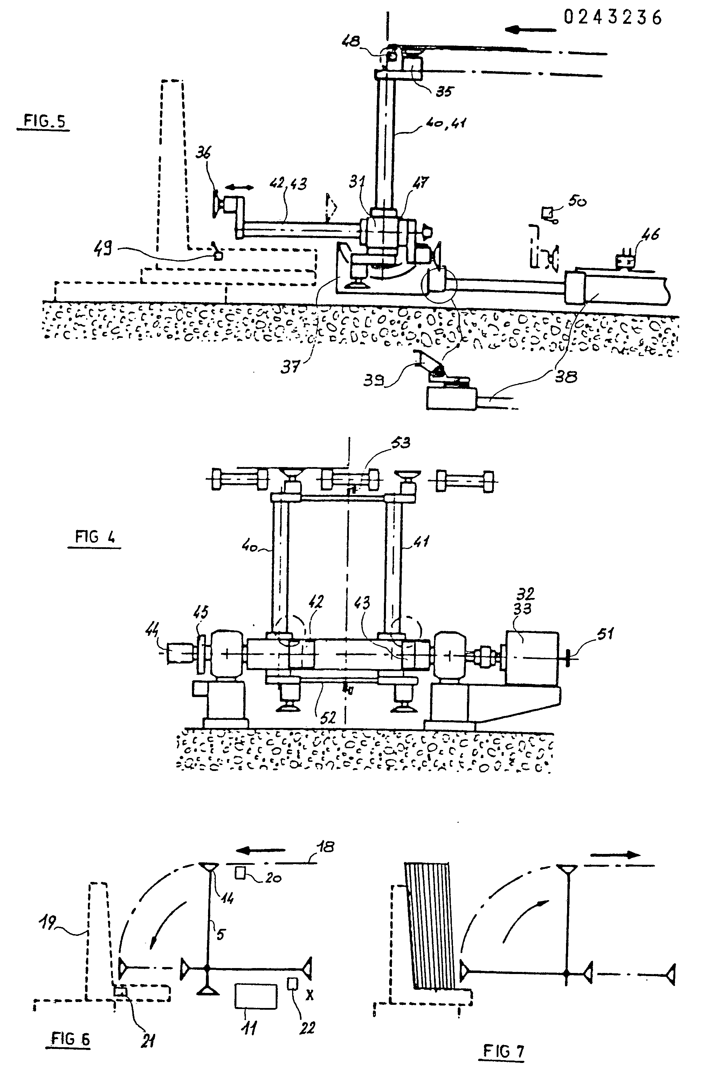

Lorsque les moyens de préhension 14 sont constitués par des ventouses 15 (figure 1) montées sur des vérins à petite course 16 et reliées à un éjecteur (non représenté) alimenté en air comprimé, la préhension de l'objet se fait par insufflation d'air comprimé dans l'éjecteur du bras 5 au poste de préhension provoquant la mise en dépression de la ventouse (reliée à l'étranglement de l'éjecteur) et l'extension du vérin à petite course amenant la ventouse qui lui est reliée au contact de l'objet à saisir.

On peut tout aussi bien alimenter le vérin 16 et la ventouse par le même éjecteur.

La dépose de l'objet se fait simplement par arrêt de l'arrivée d'air comprimé dans l'éjecteur de la ventouse du bras portant l'objet.

Tous les moyens de préhension montés sur des bras parallèles sont actionnés simultanément, de même lorsque plusieurs moyens de préhension sont montés à la même extrémité d'un même bras.

La figure 7 représente schématiquement le déchargement d'objets (plaques par exemple) à partir d'un pupitre vers un convoyeur. La description du fonctionnement faite à partir de la figure 6 est évidemment applicable, la rotation de l'arbre s'effectuant en sens opposé par rapport à celui indiqué sur la figure 6.

La description du dispositif et de son fonctionnement font ressortir clairement que les dispositifs répondant à l'invention présentent les avantages suivants :
- mise en place possible dans des espaces réduits : du fait de l'effacement des bras, la portion de l'espace délimitée par un plan passant par l'axe d'un bras au poste de dépose, ce plan faisant un angle α avec l'axe d'un bras au poste de préhension, et du côté du plan opposé au poste de préhension, ladite portion d'espace n'est pratiquement pas occupée par le dispositif,
- rapidité d'exécution parce que chaque extrémité de bras est munie de moyen de préhension et que le coulissement du bras au poste de dépose permet de gagner le temps de rotation d'un angle $\pi$.

Pour illustrer la description, on présente maintenant une machine pour le chargement rapide de plaques de verre selon l'invention et son fonctionnement.

Ce dispositif (figures 4 et 5) permet le chargement rapide de volumes de verre appelés primitifs qui ont été découpés sur la ligne de convoyage principale véhiculant la bande de verre à sa sortie d'unité de production.
Ces primitifs ont pour dimensions :
longueur : 600 à 1200 mm
largeur : 400 à 600 mm
épaisseur : 2 à 8 mm
dans chaque rangée les primitifs ont les mêmes dimensions.

La machine a les caractéristiques suivantes :
dimensions : 2120 x 2850 mm
hauteur du plan de préhension : 1290 mm
masse : 1000 kg environ
puissance nécessaire : 3 kW
cadence : 2 s maximum, en tout cas 2 à 4 s.

Les primitifs sont chargés sur des pupitres montés sur des chariots de stockage, épaisseur maximale des piles : 475 mm.

La machine est constituée :
. d'un arbre horizontal 31 commandé en rotation par un indexeur 32 à quatre postes, lui-même entraîné par un motoréducteur 33.
. de deux couples de bras orthogonaux (40, 42) et (41, 43) pouvant coulisser dans l'arbre 31 et montés perpendiculairement à cet arbre. Les extrémités de ces bras coulissants sont équipées d'un vérin à petite course 35 portant une ventouse 36 de diamètre 150 mm. Une glissière 37 fixée sur le bâti de la machine assure le verrouillage des bras dans la position adéquate par roulement dans ladite glissière, les galets étant montés sur les entretoises 52.
. le coulissement des couples de bras est commandé par un vérin pneumatique linéaire 38 fixé sur le bâti de la machine. Un dispositif à gâchette 39 assure l'accrochage de la tige de vérin sur l'entretoise 52 reliant les bras.
. une source d'air comprimé (maximum 7 kg/cm²) alimente :
- d'une part, par l'intermédiaire d'un joint tournant 44 et d'un jeu de distributeurs à commande par came 45, les vérins 35 et les éjecteurs qui ont pour fonction de créer le vide nécessaire dans les ventouses.
- d'autre part, le vérin à grande course (pour la rétraction des bras) 38 par l'intermédiaire du distributeur 46.
. le circuit d'air passe à l'intérieur des bras et n'est alimenté que lorsque ceux-ci sont à l'arrêt en position extrême (raccord 47).
. un pupitre relié à un automate programmable autorise le fonctionnement automatique ou séquence par séquence de la machine. Les capteurs nécessaires au fonctionnement et à la sécurité sont placés soit sur l'équipement, soit à proximité, en particulier :
- capteur "présence verre" sur le convoyeur d'amenée 48
- capteur "pupitre en position chargement" 49
- capteur de sécurité "bras rétracté" 50
- capteur "indexeur en position attente" 51

A noter que les cames de commande des distributeurs pneumatiques alimentant les éjecteurs sont réglables de façon à assurer un enchaînement correct et optimisé des séquences.

Fonctionnement en chargeuse :

Les deux couples de bras parallèles sont appliqués sur la même plaque par passage des bras entre les bandes du convoyeur, la plus grande dimension de la plaque étant parallèle à l'arbre.

On distingue quatre types de séquences pour une rotation d'arbre :
* séquence 1 : . préhension d'un volume par extension des vérins 35 et mise en service de l'éjecteur des bras (40, 41)
. dépose d'un volume par extension des vérins et arrêt de l'éjecteur des bras (42, 43) - coulissement des bras (42, 43) par rétraction du vérin à grande course 38 en contact avec l'entretoise 52 par son dispositif d'accrochage 39.

* séquence 2 : . rotation de l'arbre de 90° amenant les bras (40, 41) au poste de dépose et les bras (42, 43) au poste de préhension - les vérins 35 des bras (40, 41) se rétractent pendant la rotation.

* séquence 3 : . dépose d'un volume par les bras (40, 41) et coulissement desdits bras
. préhension d'un volume par les bras (42, 43)

* séquence 4 : . rotation de l'arbre de 90° amenant les bras en position de départ pour la séquence 1.

Les temps d'exécution sont reportés dans le tableau suivant :

```
Angle d'indexage de l'arbre ——►  0°      90°           180°
d'entraînement  31 des bras.


Temps en secondes  ———————►  0      1 s      2 s      3 s      4 s


- Séquences :

./Impression capteur 48 /
           (Présence verre) ———
Bras (40, 41)
. Extension vérin (35)—————
. Alimentation éjecteur ———


Préhension d'un volume


. Rotation de l'arbre(31) de 90° ———
. Rétraction vérin (35)en
  position x

. Extension du vérin (38)
           Temporisation ———
. Extension vérin 35 avec verre ———
. Arrêt éjecteurs ———
. Rétraction vérin 35———
. Rétraction vérin 38 ———


Bras (40, 42)
. Extension vérin (35) ———
. Alimentation éjecteurs ———
  (prise verre)
. Rotation de l'arbre 31 de 90° ———
. Rétraction vérin 35  en ———
  position x
. Extension du vérin (38) ———
. Extension du vérin 35 avec verre ———
. Arrêt éjecteurs ———
. Rétraction vérin 35 ———
. Rétraction vérin 38 ———

        │
        ▼
      etc.
```

Ainsi avec un tel dispositif on atteint au maximum des cadences de 2 s (un volume pris toutes les 2 s).

## Revendications

1. Dispositif pour le transfert d'objets, notamment de plaques de verre, entre un poste de préhension et un poste de dépose, caractérisé en ce qu'il comprend :

- au moins un bras (5) monté perpendiculairement à un arbre (3) qui l'entraîne en rotation, ledit bras pouvant coulisser perpendiculairement audit arbre
- des moyens de préhension (15) montés à chaque extrémité dudit bras
- des moyens pour la commande automatique de la rotation de l'arbre du coulissement et du verrouillage du bras et de la manoeuvre des moyens de préhension.

2. Dispositif pour le transfert rapide d'objets , notamment de plaques de verre,selon la revendication 1, caractérisé en ce qu'il comporte des couples de bras orthogonaux.

3. Dispositif selon la revendication 1, caractérisé en ce que des bras parallèles peuvent être reliés entre eux de manière solidaire par une entretoise.

4. Dispositif selon la revendication 1, caractérisé en ce que chaque bras coulisse à l'intérieur de l'espace aménagé à travers l'arbre et dans une direction perpendiculaire audit arbre.

5. Dispositif selon la revendication 1, caractérisé en ce que l'arbre est disposé horizontalement.

6. Dispositif selon la revendication 1, caractérisé en ce que l'arbre est disposé verticalement.

7. Dispositif selon la revendication 1, caractérisé en ce que le coulissement est commandé par un vérin dit à grande course se déplaçant d'une valeur prédéterminée, ledit vérin étant fixé sur le bâti du dispositif.

8. Dispositif selon la revendication 1, caractérisé en ce que les moyens de préhension sont constitués par des ventouses.

9. Dispositif selon la revendication 1, caractérisé en ce que la rotation de l'arbre est commandée par un indexeur à plusieurs postes.

10. Dispositif selon la revendication 1, caractérisé en ce que les moyens pour la commande automatique de déplacement des bras comportent :
- des capteurs détectant la présence d'objet au poste de préhension ;
- des capteurs détectant la présence d'objet au poste de déchargement ;
- des capteurs détectant la position du bras ;
- des éléments déterminant la position de l'indexeur.

11. Dispositif selon la revendication 8, caractérisé en ce que les ventouses sont reliées à des éjecteurs en communication avec le réseau d'air comprimé.

12. Dispositif selon les revendications 8 et 11, caractérisé en ce que chaque ventouse est montée sur un vérin à faible course.

13. Dispositif selon les revendications 1, 8 et 11, caractérisé en ce que les circuits d'air comprimé passent à l'intérieur des bras et que des bras parallèles et situés du même côté de l'arbre sont alimentés par le même circuit.

8

0 2 4 3 2 3 6

FIG 1

FIG 2

FIG 3

FIG.5

0243236

FIG 4

FIG 6

FIG 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 012 081  (SAINT-GOBAIN INDUSTRIES)<br>* En entier * | 1 | B 65 G  49/06 |
| | --- | | |
| A | DE-B-2 613 322 (SPIEGELGLASWERKE GERMANIA)<br>* En entier * | 1 | |

DOMAINES TECHNIQUES RECHERCHES (Int. Cl.4)

B 65 G  49/00

Le présent rapport de recherche a été établi pour toutes les revendications

| Lieu de la recherche | Date d'achèvement de la recherche | Examinateur |
|---|---|---|
| LA HAYE | 02-06-1987 | VAN DEN BOSSCHE W.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82